# EUROPÄISCHE PATENTANMELDUNG

(11) **EP 3 338 609 A1**
(43) Veröffentlichungstag der Anmeldung: **27.06.2018**
(21) Anmeldenummer: 17202200.6
(22) Anmeldetag: 17.11.2017
(51) Int. Cl.: A47L 9/00, H04L 12/28, G05D 1/02, H04W 4/02

(54) **VERFAHREN ZUM STEUERN ZUMINDEST EINER BELEUCHTUNGSEINRICHTUNG UND/ODER EINER ABDUNKELUNGSEINRICHTUNG IN EINER SMART HOME UMGEBUNG DURCH EINEN HOCHAUTOMATISIERTEN STAUBSAUGER UND STAUBSAUGER**

(30) Priorität: 20.12.2016 DE 102016124897
(71) Anmelder: Miele & Cie. KG, 33332 Gütersloh (DE)
(72) Erfinder: KARA, Seyfettin, 32139 Spenge (DE); REINKe, Nicole, 13347 Berlin (DE); TSCHIRSCHKE, Daniel, 33607 Bielefeld (DE); KEISKER, Jennifer, 33607 Bielefeld (DE); RIEDENKLAU, Eckard, 33647 Bielefeld (DE); WOLF, Cornelius, 33739 Bielefeld (DE); ERNST, Holger, 33613 Bielefeld (DE); SCHMEDT, Andreas, 33428 Harsewinkel (DE); GERTH, Volker, 33739 Bielefeld (DE); POTT, Thomas, 33719 Bielefeld (DE); SIEGHOLT, Bernd, 33602 Bielefeld (DE); SCHNEIDER, Sven, 58300 Wetter (DE)

(57) **Zusammenfassung**

Verfahren zum Steuern zumindest einer Beleuchtungseinrichtung und/oder einer Abdunkelungseinrichtung in einer Smart Home Umgebung durch einen hochautomatisierten Staubsauger und Staubsauger

Der hier vorgestellte Ansatz betrifft ein Verfahren zum Steuern zumindest einer Beleuchtungseinrichtung (105) und/oder einer Abdunkelungseinrichtung in einer Smart Home Umgebung durch einen hochautomatisierten Staubsauger (110). Das Verfahren umfasst zumindest einen Schritt des Einlesens und einen Schritt des Ausgebens. Im Schritt des Einlesens wird ein Belichtungsbildsignal (120) eingelesen, das einen Belichtungsparameter eines Kamerabilds (125) einer Kamera (115) des Staubsaugers (110) repräsentiert. Im Schritt des Ausgebens wird ein Steuersignal (130) ausgegeben, das dazu ausgebildet ist, um unter Verwendung zumindest des Belichtungsbildsignals (120) zumindest eine Schnittstelle zu zumindest der Abdunkelungseinrichtung und/oder der Beleuchtungseinrichtung (105) anzusteuern, um eine Belichtung eines folgenden Kamerabilds zu ändern.

## Beschreibung

Verfahren zum Steuern zumindest einer Beleuchtungseinrichtung und/oder einer Abdunkelungseinrichtung in einer Smart Home Umgebung durch einen hochautomatisierten Staubsauger und Staubsauger

Der hier vorgestellte Ansatz betrifft ein Verfahren zum Steuern zumindest einer Beleuchtungseinrichtung und/oder einer Abdunkelungseinrichtung in einer Smart Home Umgebung durch einen hochautomatisierten Staubsauger und einen Staubsauger.

Es gibt hochautomatisierte Staubsauger, die mit einer Schnittstelle, z. B. einer App und/oder einer Smart Home Umgebung, kommunizieren, sodass Statusmeldungen des Staubsaugers wie ein Programm, eine Laufzeit und/oder eine Position sowie ggf. eine Karte der Umgebung einem Bediener angezeigt werden. Einige hochautomatisierte Staubsauger verfügen zudem über eine optische Navigationssensorik.

Die Druckschrift US 2014 / 0207280 A1 offenbart ein Verfahren zur Steuerung einer Beleuchtungseinrichtung in einer Smart Home Umgebung, wobei die Beleuchtungseinrichtung automatisch aktivierbar ist, um einen Arbeitsbereich eines Reinigungsroboters zu beleuchten.

Die Druckschrift US 2009 / 0028387 A1 offenbart einen mobilen Roboter, welcher eine Einheit zur Bestimmung der vorherrschenden Beleuchtungsstärke an einer Position des Roboters aufweist, wobei in Abhängigkeit von der bestimmten Beleuchtungsstärke mit einer Beleuchtungseinheit die Position des Roboters beleuchtet wird.

Dem hier vorgestellten Ansatz liegt die Aufgabe zugrunde, ein Verfahren zum Steuern zumindest einer Beleuchtungseinrichtung und/oder einer Abdunkelungseinrichtung in einer Smart Home Umgebung durch einen hochautomatisierten Staubsauger und einen verbesserten Staubsauger zu schaffen.

Erfindungsgemäß wird diese Aufgabe durch ein Verfahren zum Steuern zumindest einer Beleuchtungseinrichtung und/oder einer Abdunkelungseinrichtung in einer Smart Home Umgebung durch einen hochautomatisierten Staubsauger und schließlich einen Staubsauger mit den Merkmalen bzw. Schritten der Hauptansprüche gelöst. Vorteilhafte Ausgestaltungen und Weiterbildungen des Ansatzes ergeben sich aus den nachfolgenden Unteransprüchen.

Die mit dem hier vorgestellten Ansatz erreichbaren Vorteile bestehen darin, dass hochautomatisierte Staubsauger, die eine optische Navigationssensorik nutzen, dazu ausgebildet sind, um unter Verwendung eines Steuergeräts, das das im Folgenden vorgestellte Verfahren ausführt, beeinträchtigende Lichtverhältnisse selbst zu regeln. So kann ein funktionierender Betrieb des hochautomatisierten Staubsaugers auch bei unterschiedlichen Lichtverhältnissen sichergestellt werden.

Ein Verfahren zum Steuern zumindest einer Beleuchtungseinrichtung und/oder einer Abdunkelungseinrichtung in einer Smart Home Umgebung durch einen hochautomatisierten Staubsauger umfasst zumindest die folgenden Schritte:
Einlesen eines Belichtungsbildsignals, das einen Belichtungsparameter eines Kamerabilds einer Kamera des Staubsaugers repräsentiert; und
Ausgeben eines Steuersignals, das dazu ausgebildet ist, um unter Verwendung zumindest des Belichtungsbildsignals zumindest eine Schnittstelle zu zumindest der Abdunkelungseinrichtung und/oder der Beleuchtungseinrichtung anzusteuern, um eine Belichtung eines folgenden Kamerabilds zu ändern.

Dieses Verfahren kann beispielsweise in Software oder Hardware oder in einer Mischform aus Software und Hardware beispielsweise in einem Steuergerät implementiert sein.

Unter einem hochautomatisierten Staubsauger kann ein Staubsauger verstanden werden, der zumindest teilweise ohne Interaktion oder Steuerung durch einen Benutzer des Staubsaugers über einen zu reinigenden oder pflegenden Boden fährt oder geführt wird. Solche hochautomatisierten Staubsauger werden auch Saugroboter oder Robotsauger genannt.

Im Schritt des Einlesens kann ein Belichtungsbildsignal eingelesen werden, bei dem der Belichtungsparameter eine Überbelichtung des Kamerabilds repräsentiert. Die Überbelichtung kann hierbei durch eine Auswertung von Helligkeitswerten und/oder einer Helligkeitsverteilung der Belichtungsparameter auf dem Kamerabild festgestellt werden. Wenn ein solches Belichtungsbildsignal eingelesen wird, kann im Schritt des Ausgebens das Steuersignal ausgegeben werden, das dazu ausgebildet ist, um unter Verwendung des Belichtungsbildsignals die zumindest eine Schnittstelle zu der zumindest einen Abdunkelungseinrichtung und/oder Beleuchtungseinrichtung anzusteuern, um das folgende Kamerabild abzudunkeln.

Hierbei kann beispielsweise im Schritt des Ausgebens das Steuersignal ausgegeben werden, das dazu ausgebildet ist, um unter Verwendung zumindest des die Überbelichtung repräsentierenden Belichtungsbildsignals die zumindest eine Schnittstelle zu der zumindest einen Abdunkelungseinrichtung anzusteuern, um die als eine Jalousie und/oder ein Rollladen ausgeformte Abdunkelungseinrichtung auszufahren und/oder zu justieren und/oder zu schließen und/oder die zumindest eine Schnittstelle zu der zumindest einen Beleuchtungseinrichtung anzusteuern, um die eine als eine Zimmerlampe ausgeformte Beleuchtungseinrichtung auszuschalten oder zu dimmen. So kann vorteilhafterweise ansprechend auf eine herrschende Überbelichtung eine Umgebung des Staubsaugers abgedunkelt werden, damit eine optische Navigation des hochautomatisierten Staubsaugers sicher weitergeführt werden kann.

Zusätzlich oder alternativ kann im Schritt des Einlesens aber auch das Belichtungsbildsignal eingelesen werden, bei dem der Belichtungsparameter eine Unterbelichtung des Kamerabilds repräsentiert. Die Unterbelichtung kann hierbei ebenfalls durch eine Auswertung von Helligkeitswerten und/oder einer Helligkeitsverteilung der Belichtungsparameter auf dem Kamerabild festgestellt werden. Wenn ein derartiges Belichtungsbildsignal eingelesen wird, kann im Schritt des Ausgebens das Steuersignal ausgegeben werden, das dazu ausgebildet ist, um unter Verwendung des Belichtungsbildsignals die zumindest eine oder zumindest eine weitere Schnittstelle zu der zumindest einen Beleuchtungseinrichtung und/oder Abdunkelungseinrichtung anzusteuern, um das folgende Kamerabild aufzuhellen. Hierbei kann beispielsweise im Schritt des Ausgebens das Steuersignal ausgegeben werden, das dazu ausgebildet ist, um unter Verwendung zumindest des die Unterbelichtung repräsentierenden Belichtungsbildsignals die zumindest eine oder die zumindest eine weitere Schnittstelle zu der zumindest einen Beleuchtungseinrichtung anzusteuern, um die als die Zimmerlampe ausgeformte Beleuchtungseinrichtung einzuschalten oder zu dimmen und/oder die oder die zumindest eine weitere Schnittstelle zu der zumindest einen als die Jalousie ausgeformten Abdunkelungseinrichtung anzusteuern, um die Abdunkelungseinrichtung einzufahren und/oder zu justieren und/oder zu öffnen. So kann vorteilhafterweise ansprechend auf eine herrschende Unterbelichtung eine Umgebung des hochautomatisierten Staubsaugers erhellt werden, damit die optische Navigation des hochautomatisierten Staubsaugers sicher weitergeführt werden kann.

Wenn das Verfahren gemäß einer vorteilhaften Ausführungsform einen Schritt des Empfangens aufweist, in dem zumindest ein Erkennungssignal empfangen wird, das zumindest eine erkannte ansteuerbare Beleuchtungseinrichtung und/oder eine erkannte ansteuerbare Abdunkelungseinrichtung repräsentiert, kann das Steuergerät oder der Staubsauger über relevante Beleuchtungseinrichtungen und/oder Abdunkelungseinrichtungen in Kenntnis gesetzt werden. Hierbei können die Beleuchtungseinrichtung und/oder die Abdunkelungseinrichtung durch die Kamera des Staubsaugers selbst eingelesen werden, beispielsweise unter Zuhilfenahme einer Objekterkennung. Das Erkennungssignal kann aber auch durch von den ansteuerbaren Beleuchtungseinrichtungen und/oder Abdunkelungseinrichtungen bereitgestellte Signale empfangen werden und/oder durch ein von einer Smart Home-Einrichtung bereitgestelltes Signal zum Bereitstellen einer Smart Home-Karte, die die ansteuerbaren Beleuchtungseinrichtungen und/oder Abdunkelungseinrichtungen kennzeichnet.

Das Verfahren kann auch einen Schritt des Markierens aufweisen, in dem ansprechend auf den Schritt des Empfangens des Erkennungssignals ein Markiersignal ausgegeben wird, das dazu ausgebildet ist, um eine Beleuchtungseinrichtungsposition der erkannten ansteuerbaren Beleuchtungseinrichtung und/oder eine Abdunkelungseinrichtungsposition der erkannten ansteuerbaren Abdunkelungseinrichtung in einer Karte zu markieren. So kann eine Vielzahl von ansteuerbaren Beleuchtungseinrichtungen und/oder Abdunkelungseinrichtungen auf der Karte zusammengetragen werden.

Wenn nun im Schritt des Einlesens das Belichtungsbildsignal eingelesen wird, das ferner eine Staubsaugerposition des Staubsaugers, beispielsweise eine geografische Staubsaugerposition des Staubsaugers, umfasst, kann dies einem Bestimmen von geeigneten anzusteuernden Beleuchtungseinrichtungen und/oder Abdunkelungseinrichtungen, beispielsweise solchen in der Nähe der Staubsaugerposition, dienen.

Gemäß einer vorteilhaften Ausführungsform umfasst das Verfahren weiterhin einen Schritt des Bestimmens, in dem das Steuersignal unter Verwendung der Staubsaugerposition bestimmt wird. So kann beispielsweise ausgehend von der Staubsaugerposition unter Zuhilfenahme zumindest einer Abdunkelungseinrichtungsposition und/oder zumindest einer Beleuchtungseinrichtungsposition eine nächste oder eine zugeordnete Beleuchtungseinrichtung und/oder Abdunkelungseinrichtung angesteuert werden, um einen Bereich in der Nähe der Staubsaugerposition zu erhellen oder abzudunkeln.

Von Vorteil ist es weiterhin, wenn das Verfahren einen Schritt des Erkennens aufweist, in dem zumindest eine Schaltart zumindest der erkannten Beleuchtungseinrichtung und/oder der erkannten Abdunkelungseinrichtung erkannt wird. Hierbei kann beispielsweise ein Mitteilungssignal empfangen werden, das dazu ausgebildet ist, um dem Steuergerät oder dem Staubsauger die Schaltart mitzuteilen. Beispielhafte Schaltarten sind: ein Anschalten einer Beleuchtungseinrichtung, ein Ausschalten einer Beleuchtungseinrichtung, ein Dimmen einer Beleuchtungseinrichtung, ein Einfahren eines Rollladens und/oder einer Jalousie, ein Ausfahren eines Rollladens und/oder einer Jalousie und/oder ein Justieren bzw. Drehen von Jalousieblättern der Jalousie.

Im Schritt des Ausgebens kann das Steuersignal dazu ausgebildet sein, um eine zu einer Smart Home-Einrichtung und/oder Smartphone-App gehörende Schnittstelle anzusteuern. So ist es möglich, die Beleuchtungseinrichtungen und/oder die Abdunkelungseinrichtungen nicht direkt anzusteuern und das Verfahren zumindest teilweise in eine bereits bestehende Smart Home-Einrichtung und/oder App zu integrieren.

Der hier vorgestellte Ansatz schafft ferner ein Steuergerät, das ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante des Ansatzes in Form eines Steuergeräts kann die dem Ansatz zugrunde liegende Aufgabe schnell und effizient gelöst werden.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt durch das Steuergerät eine Steuerung eines Steuersignals. Hierzu kann das Steuergerät beispielsweise auf Sensorsignale wie zumindest ein Belichtungssignal zugreifen. Die Ansteuerung erfolgt über Aktoren wie eine Einleseeinrichtung und eine Ausgabeeinrichtung.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ein Staubsauger, insbesondere ein hochautomatisierter Staubsauger, weist das vorgestellte Steuergerät auf. Ein hier vorgestellter Staubsauger kann als Ersatz für bekannte Staubsauger dienen, wobei der vorgestellte Staubsauger vorteilhafterweise die Schritte des vorgestellten Verfahrens ausführen und somit eine Belichtung selbst steuern kann.

Ausführungsbeispiele des Ansatzes sind in den Zeichnungen rein schematisch dargestellt und werden nachfolgend näher beschrieben. Es zeigt
- Figur 1: eine schematische Darstellung eines Steuergeräts zum Steuern zumindest einer Beleuchtungseinrichtung und/oder einer Abdunkelungseinrichtung in einer Smart Home Umgebung durch einen hochautomatisierten Staubsauger gemäß einem Ausführungsbeispiel; und
- Figur 2: ein Ablaufdiagramm eines Verfahrens zum Steuern zumindest einer Beleuchtungseinrichtung und/oder einer Abdunkelungseinrichtung in einer Smart Home Umgebung durch einen hochautomatisierten Staubsauger gemäß einem Ausführungsbeispiel.

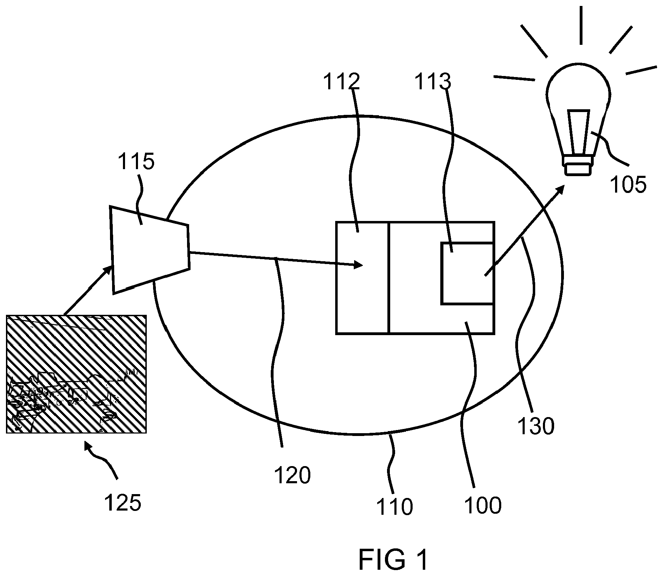

Figur 1 zeigt eine schematische Darstellung eines Steuergeräts 100 zum Steuern zumindest einer Beleuchtungseinrichtung 105 und/oder einer Abdunkelungseinrichtung in einer Smart Home Umgebung durch einen hochautomatisierten Staubsauger 110 gemäß einem Ausführungsbeispiel. Das Steuergerät 100 weist gemäß diesem Ausführungsbeispiel eine Einleseeinrichtung 112 und eine Ausgabeeinrichtung 113 auf und ist gemäß diesem Ausführungsbeispiel an dem hochautomatisierten Staubsauger 110 angeordnet, der zudem zumindest eine Kamera 115 aufweist.

Die Einleseeinrichtung 112 des Steuergeräts 100 ist dazu ausgebildet, um zumindest ein Belichtungssignal 120 einzulesen, das einen Belichtungsparameter eines Kamerabilds 125 der Kamera 115 des Staubsaugers 110 repräsentiert. Die Ausgabeeinrichtung 113 des Steuergeräts 100 ist dazu ausgebildet, um ein Steuersignal 130 auszugeben, das dazu ausgebildet ist, um unter Verwendung zumindest des Belichtungsbildsignals 120 zumindest eine Schnittstelle zu zumindest der Abdunkelungseinrichtung und/oder der Beleuchtungseinrichtung 105 anzusteuern, um eine Belichtung eines folgenden Kamerabilds zu ändern.

Gemäß diesem Ausführungsbeispiel wird durch das Steuergerät 100 ein Belichtungssignal 120 eingelesen, bei dem der Belichtungsparameter eine Unterbelichtung des Kamerabilds 125 repräsentiert, woraufhin das Steuersignal 130 ausgegeben wird, das dazu ausgebildet ist, um unter Verwendung des Belichtungsbildsignals 120 die Schnittstelle zu der Beleuchtungseinrichtung 105 anzusteuern, um eine als eine Zimmerlampe ausgeformte Beleuchtungseinrichtung 105 einzuschalten, um das folgende Kamerabild aufzuhellen.

Im Folgenden werden Ausführungsbeispiele anhand der Figur 1 nochmals näher beschrieben:
Das hier vorgestellte Steuergerät 100 ermöglicht eine Smart Home Beleuchtungssteuerung oder Elementesteuerung durch den hochautomatisierten Staubsauger 110.

Hochautomatisierte Staubsauger 110 mit einer optischen Navigationssensorik können in ihrer Navigationsleistung beeinträchtigt sein, wenn der zu bearbeitende Raum zu dunkel, z. B. durch einen wolkenverhangenen Himmel, Nacht, oder aber auch zu hell ist, z. B. durch einen sehr sonnigen Tag. Bei der optischen Navigationssensorik des Staubsaugers 110 handelt es sich im Allgemeinen um kamerabasierte Systeme. Hierbei wird meist das Kamerabild 125 hinsichtlich Helligkeitswerten sowie einer Helligkeitsverteilung ausgewertet und daraus geometrische Strukturen gewonnen. In gewissen Grenzen kann der Staubsauger 110 mit einer Lichtquelle, z. B. IR-Leuchtdioden, für eine Aufhellung des Kamerabilds 125 in dunkler Umgebung sorgen, jedoch ist eine Reichweite dieser - am Staubsauger 110 verbaubaren - Lichtquelle gering. Weiterhin kann in einer sehr hellen Umgebung bzw. bei direktem Sonneneinfall eine Optik geblendet werden, sodass auch in diesem Fall keine aussagefähigen Daten ermittelt werden können.

Damit ein Bediener nicht vor einer Reinigungsfahrt manuell in den entsprechenden Räumen eine für den Staubsauger 110 optimale Situation einstellen muss bzw. ohne manuelle Veränderung ein nicht optimales Reinigungsergebnis vorfindet, ist der hier vorgestellte Staubsauger 110 in der Lage, selbstständige Eingriffe vorzunehmen. Hierzu kann der Staubsauger 110 eine herrschende Beleuchtungssituation an seine Bedürfnisse anpassen und dazu im Smart Home verfügbare Elemente oder Schaltelemente in Form der Beleuchtungseinrichtung 105 und der Abdunkelungseinrichtung nutzen.

Dem Staubsauger 110 müssen in der Smart Home Umgebung verfügbare Beleuchtungseinrichtungen 105 und/oder Abdunkelungseinrichtungen bekannt sein, dazu kann der Bediener dem Staubsauger 110 die in einem Raum verfügbaren Beleuchtungseinrichtungen 105 und/oder Abdunkelungseinrichtungen zumindest in eine Liste oder in einer grafischen Karte, ggf. kann diese Karte vom Roboter selbst während Reinigungsfahrten aufgebaut werden, eintragen. Diesen Beleuchtungseinrichtungen 105 und/oder Abdunkelungseinrichtungen ist dann noch eine entsprechende Schaltart, z. B. ein/aus/dimmen/hoch/runter.., als Eigenschaft zugewiesen worden. Gemäß diesem Ausführungsbeispiel ist der Staubsauger 110 in der Lage, die vorhandenen Smart Home-Beleuchtungseinrichtungen 105 und/oder -Abdunkelungseinrichtungen selbstständig zu erkennen und in der Karte einzutragen. Dies ist möglich, da in einer hier dargestellten Wohnumgebung Smart Home- Beleuchtungseinrichtungen 105 und/oder - Abdunkelungseinrichtungen mit standardisierten Schnittstellen verwendet werden, z. B. openHAB, deren Schnittstelleninformationen von dem Staubsauger 110 ausgewertet werden können. Wenn der Staubsauger 110 nun eine störende Beleuchtungssituation in einem Raum erkennt, kann er darauf entsprechend reagieren, z. B. indem er wie hier die Zimmerlampe einschaltet oder gemäß einem alternativen Ausführungsbeispiel ein eingeschaltetes künstliches Licht der Zimmerlampe in seiner Helligkeit verändert, bzw. als Rollläden ausgeformte Abdunkelungseinrichtungen in ihrer Abschattung verändert. So kann der Staubsauger 110 beispielsweise an einem wolkenverhangenen Tag bzw. bei Nacht Lichtquellen wie die Zimmerlampe im Raum einschalten oder aber bei Blendeinflüssen durch die Sonne die Rollläden absenken.

Während einer Urlaubssituation bzw. längerer Abwesenheit von Personen kann der Staubsauger 110 durch ein entsprechendes Betätigen von Licht und/oder Rollladen eine Anwesenheit der Personen simulieren und somit möglichen Einbruchsversuchen vorbeugen. Aufgrund der in der Karte vom Staubsauger 110 eingetragenen Beleuchtungseinrichtungen 105 und/oder Abdunkelungseinrichtungen kann ein Bediener ohne zusätzlichen Aufwand eine logische Zuordnung der Smart Home Elemente erkennen und nutzen.

So ist vorteilhafterweise durch das Steuergerät 100 ein selbstständiges Beeinflussen der Beleuchtungssituation durch den Staubsauger 110, weiterhin eine Simulation einer Personenanwesenheit trotz z. B. Urlaub und ggf. ein automatisches Erstellen der Karte mit den Smart Home- Beleuchtungseinrichtungen 105 und/oder Abdunkelungseinrichtungen ermöglicht.

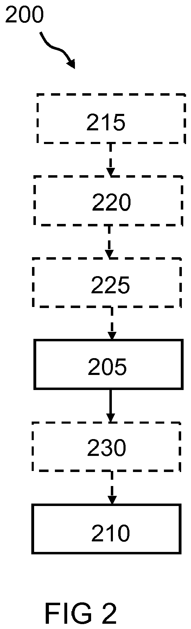

Figur 2 zeigt ein Ablaufdiagramm eines Verfahrens 200 zum Steuern zumindest einer Beleuchtungseinrichtung und/oder einer Abdunkelungseinrichtung in einer Smart Home Umgebung durch einen hochautomatisierten Staubsauger gemäß einem Ausführungsbeispiel. Dabei kann es sich um ein Verfahren 200 handeln, das von dem anhand von Figur 1 beschriebenen Steuergerät ausführbar ist. Das Verfahren 200 weist zumindest einen Schritt 205 des Einlesens und einen Schritt 210 des Ausgebens auf. Im Schritt 205 des Einlesens wird zumindest ein Belichtungsbildsignal eingelesen, das einen Belichtungsparameter eines Kamerabilds einer Kamera des Staubsaugers repräsentiert. Im Schritt 210 des Ausgebens wird das Steuersignal ausgegeben, das dazu ausgebildet ist, um unter Verwendung zumindest des Belichtungsbildsignals zumindest eine Schnittstelle zu zumindest der Abdunkelungseinrichtung und/oder der Beleuchtungseinrichtung anzusteuern, um eine Belichtung eines folgenden Kamerabilds zu ändern.

Im Schritt 205 des Einlesens wird gemäß diesem Ausführungsbeispiel ein Belichtungsbildsignal eingelesen, bei dem der Belichtungsparameter eine Unterbelichtung des Kamerabilds repräsentiert, wobei im Schritt 210 des Ausgebens das Steuersignal ausgegeben wird, das dazu ausgebildet ist, um unter Verwendung des Belichtungsbildsignals die zumindest eine Schnittstelle zu der zumindest einen Beleuchtungseinrichtung und/oder Abdunkelungseinrichtung anzusteuern, um das folgende Kamerabild aufzuhellen. Im Schritt 210 des Ausgebens wird hierbei gemäß diesem Ausführungsbeispiel das Steuersignal ausgegeben, das dazu ausgebildet ist, um unter Verwendung zumindest des die Unterbelichtung repräsentierenden Belichtungsbildsignals die zumindest eine Schnittstelle zu der zumindest einen Beleuchtungseinrichtung anzusteuern, um die als eine Zimmerlampe ausgeformte Beleuchtungseinrichtung einzuschalten und/oder zu dimmen und/oder die Schnittstelle zu der zumindest einen als eine Jalousie ausgeformten Abdunkelungseinrichtung anzusteuern, um die Abdunkelungseinrichtung einzufahren und/oder zu justieren und/oder zu öffnen.

Gemäß einem alternativen Ausführungsbeispiel wird im Schritt 205 des Einlesens ein Belichtungsbildsignal eingelesen, bei dem der Belichtungsparameter eine Überbelichtung des Kamerabilds repräsentiert, wobei im Schritt 210 des Ausgebens das Steuersignal ausgegeben wird, das dazu ausgebildet ist, um unter Verwendung des Belichtungsbildsignals die zumindest eine Schnittstelle zu der zumindest einen Abdunkelungseinrichtung und/oder Beleuchtungseinrichtung anzusteuern, um das folgende Kamerabild abzudunkeln. Gemäß diesem alternativen Ausführungsbeispiel wird folglich im Schritt 210 des Ausgebens das Steuersignal ausgegeben, das dazu ausgebildet ist, um unter Verwendung zumindest des die Überbelichtung repräsentierenden Belichtungsbildsignals die zumindest eine Schnittstelle zu der zumindest einen Abdunkelungseinrichtung anzusteuern, um die als eine Jalousie und/oder ein Rollladen ausgeformte Abdunkelungseinrichtung auszufahren und/oder zu justieren und/oder zu schließen und/oder die zumindest eine Schnittstelle zu der zumindest einen Beleuchtungseinrichtung anzusteuern, um die eine als eine Zimmerlampe ausgeformte Beleuchtungseinrichtung auszuschalten oder zu dimmen.

Gemäß diesem Ausführungsbeispiel wird außerdem im Schritt 205 des Einlesens das Belichtungsbildsignal eingelesen, das ferner eine Staubsaugerposition des Staubsaugers umfasst. Im Schritt 210 des Ausgebens wird gemäß einem alternativen Ausführungsbeispiel das Steuersignal ausgegeben, das dazu ausgebildet ist, um eine zu einer Smart Home-Einrichtung und/oder Smartphone-App gehörende Schnittstelle anzusteuern.

Optional weist das Verfahren gemäß diesem Ausführungsbeispiel weiterhin einen Schritt 215 des Empfangens, einen Schritt 220 des Markierens, einen Schritt 225 des Erkennens einer Schaltart und einen Schritt 230 des Bestimmens auf.

Im Schritt 215 des Empfangens wird zumindest ein Erkennungssignal empfangen, das zumindest eine erkannte ansteuerbare Beleuchtungseinrichtung und/oder eine ansteuerbare erkannte Abdunkelungseinrichtung repräsentiert.

Im Schritt 220 des Markierens wird ansprechend auf den Schritt 215 des Empfangens ein Markiersignal ausgegeben, das dazu ausgebildet ist, um eine Beleuchtungseinrichtungsposition der erkannten ansteuerbaren Beleuchtungseinrichtung und/oder eine Abdunkelungseinrichtungsposition der erkannten ansteuerbaren Abdunkelungseinrichtung in einer Karte zu markieren.

Im Schritt 225 des Erkennens einer Schaltart wird zumindest eine Schaltart zumindest der erkannten Beleuchtungseinrichtung und/oder der erkannten Abdunkelungseinrichtung erkannt.

Im Schritt 230 des Bestimmens wird das Steuersignal unter Verwendung der Staubsaugerposition bestimmt.

Es folgt eine detaillierte Beschreibung des Verfahrens 200: Sofern dem Staubsauger durch das Steuergerät die Möglichkeit gegeben ist, die im Haushalt verfügbaren und in der Smart Home Umgebung eingebundenen Abdunkelungseinrichtungen, die auch als Verschattungselemente bezeichnet werden können, sowie Beleuchtungseinrichtungen, die auch als Lichtquellen bezeichnet werden können, anzusteuern, kann der Staubsauger vorteilhafterweise eine Raumhelligkeit seinen Bedürfnissen anpassen. Sollte der Raum also wie gemäß diesem Ausführungsbeispiel zu dunkel sein, kann er die Abdunkelungseinrichtung öffnen bzw. wegfahren oder aber eine oder mehrere Zimmerlampen einschalten oder ggf. auch dimmen. Sollte der Raum gemäß dem alternativen Ausführungsbeispiel zu hell sein, kann der Staubsauger dagegen die Raumbeleuchtung ausschalten, ggf. auch dimmen, oder aber die Abdunkelungseinrichtung schließen bzw. zusammenfahren. Die Bedienung der Abdunkelungseinrichtungen und/oder Beleuchtungseinrichtungen erfolgt dabei nur in einem Maße, bis eine benötigte Raumhelligkeit anliegt.

Der Schritt des Empfangens 215 dient dazu, dass der Staubsauger 110 eine Zuordnung der Räumlichkeiten zu den jeweiligen dort angeordneten Abdunkelungseinrichtungen und/oder Beleuchtungseinrichtungen kennt oder kennenlernt. Dieser Schritt 215 kann einerseits dadurch erfolgen, dass der Bediener dem Staubsauger eine Liste mit den jeweiligen Informationen z. B. über Ort, Element und/oder Steuermöglichkeit zur Verfügung stellt, z. B. direkt am Staubsauger per App. Weiterhin kann der Staubsauger selbst gemäß einem Ausführungsbeispiel eine Karte der Räumlichkeiten erstellen und darin vom Bediener benötigte Informationen eintragen lassen. Gemäß einem weiteren Ausführungsbeispiel erkennt der Staubsauger mittels Objekterkennung die in den Räumlichkeiten befindlichen Abdunkelungseinrichtungen und/oder Beleuchtungseinrichtungen selbstständig und trägt diese dann im Schritt 220 des Markierens entsprechend in der Karte ein. Dann muss der Bediener nur noch angeben, welche Geräte im Smart Home eingebunden sind und welche Steuermöglichkeit vorhanden ist, z. B. Deckenlampe - dimmbar, Jalousie - auf/ab. Gemäß diesem Ausführungsbeispiel ermittelt der Staubsauger im Schritt 215 des Empfangens über bekannte bzw. standardisierte Schnittstellen selbstständig die im Smart Home verfügbaren Abdunkelungseinrichtungen und/oder Beleuchtungseinrichtungen und übernimmt diese im Schritt 220 des Markierens in die Karte. Hilfreich ist dabei, dass der Staubsauger bei Anwesenheit in einem Raum die erreichbaren Abdunkelungseinrichtungen und/oder Beleuchtungseinrichtungen testet und die Reaktion mittels der Kamera beobachten kann.

Die hier vorgestellten Verfahrensschritte können wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (200) zum Steuern zumindest einer Beleuchtungseinrichtung (105) und/oder einer Abdunkelungseinrichtung in einer Smart Home Umgebung durch einen hochautomatisierten Staubsauger (110), wobei das Verfahren (200) zumindest die folgenden Schritte umfasst:
Einlesen (205) eines Belichtungsbildsignals (120), das einen Belichtungsparameter eines Kamerabilds (125) einer Kamera (115) des Staubsaugers (110) repräsentiert; und
Ausgeben (210) eines Steuersignals (130), das dazu ausgebildet ist, um unter Verwendung zumindest des Belichtungsbildsignals (120) zumindest eine Schnittstelle zu zumindest der Abdunkelungseinrichtung und/oder der Beleuchtungseinrichtung (105) anzusteuern, um eine Belichtung eines folgenden Kamerabilds zu ändern.

2. Verfahren (200) gemäß Anspruch 1, bei dem im Schritt (205) des Einlesens das Belichtungsbildsignal (120) eingelesen wird, bei dem der Belichtungsparameter eine Überbelichtung des Kamerabilds (125) repräsentiert, wobei im Schritt (210) des Ausgebens das Steuersignal (130) ausgegeben wird, das dazu ausgebildet ist, um unter Verwendung des Belichtungsbildsignals (120) die zumindest eine Schnittstelle zu der zumindest einen Abdunkelungseinrichtung und/oder Beleuchtungseinrichtung (105) anzusteuern, um das folgende Kamerabild abzudunkeln.

3. Verfahren (200) gemäß Anspruch 2, bei dem im Schritt (210) des Ausgebens das Steuersignal (130) ausgegeben wird, das dazu ausgebildet ist, um unter Verwendung zumindest des die Überbelichtung repräsentierenden Belichtungsbildsignals (120) die zumindest eine Schnittstelle zu der zumindest einen Abdunkelungseinrichtung anzusteuern, um die als eine Jalousie und/oder ein Rollladen ausgeformte Abdunkelungseinrichtung auszufahren und/oder zu justieren und/oder zu schließen und/oder die zumindest eine Schnittstelle zu der zumindest einen Beleuchtungseinrichtung (105) anzusteuern, um die eine als eine Zimmerlampe ausgeformte Beleuchtungseinrichtung (105) auszuschalten oder zu dimmen.

4. Verfahren (200) gemäß Anspruch 1, bei dem im Schritt (205) des Einlesens das Belichtungsbildsignal (120) eingelesen wird, bei dem der Belichtungsparameter eine Unterbelichtung des Kamerabilds (125) repräsentiert, wobei im Schritt (210) des Ausgebens das Steuersignal (130) ausgegeben wird, das dazu ausgebildet ist, um unter Verwendung des Belichtungsbildsignals (120) die zumindest eine oder zumindest eine weitere Schnittstelle zu der zumindest einen Beleuchtungseinrichtung (105) und/oder Abdunkelungseinrichtung anzusteuern, um das folgende Kamerabild aufzuhellen.

5. Verfahren (200) gemäß Anspruch 4, bei dem im Schritt (210) des Ausgebens das Steuersignal (130) ausgegeben wird, das dazu ausgebildet ist, um unter Verwendung zumindest des die Unterbelichtung repräsentierenden Belichtungsbildsignals (120) die zumindest eine oder die zumindest eine weitere Schnittstelle zu der zumindest einen Beleuchtungseinrichtung (105) anzusteuern, um die als eine Zimmerlampe ausgeformte Beleuchtungseinrichtung (105) einzuschalten oder zu dimmen und/oder die oder die zumindest eine weitere Schnittstelle zu der zumindest einen als eine Jalousie ausgeformten Abdunkelungseinrichtung anzusteuern, um die Abdunkelungseinrichtung einzufahren und/oder zu justieren und/oder zu öffnen.

6. Verfahren (200) gemäß einem der vorangegangenen Ansprüche, mit einem Schritt (215) des Empfangens, in dem zumindest ein Erkennungssignal empfangen wird, das zumindest eine erkannte ansteuerbare Beleuchtungseinrichtung (105) und/oder eine ansteuerbare erkannte Abdunkelungseinrichtung repräsentiert.

7. Verfahren (200) gemäß Anspruch 6, mit einem Schritt (220) des Markierens, in dem ansprechend auf den Schritt (215) des Empfangens ein Markiersignal ausgegeben wird, das dazu ausgebildet ist, um eine Beleuchtungseinrichtungsposition der erkannten ansteuerbaren Beleuchtungseinrichtung (105) und/oder eine Abdunkelungseinrichtungsposition der erkannten ansteuerbaren Abdunkelungseinrichtung in einer Karte zu markieren.

8. Verfahren (200) gemäß einem der vorangegangenen Ansprüche, bei dem im Schritt (205) des Einlesens das Belichtungsbildsignal (120) eingelesen wird, das ferner eine Staubsaugerposition des Staubsaugers (110) umfasst.

9. Verfahren (200) gemäß Anspruch 8, mit einem Schritt (230) des Bestimmens, in dem das Steuersignal (130) unter Verwendung der Staubsaugerposition bestimmt wird.

10. Verfahren (200) gemäß einem der Ansprüche 6 bis 9, mit einem Schritt (225) des Erkennens einer Schaltart zumindest der erkannten Beleuchtungseinrichtung (105) und/oder der erkannten Abdunkelungseinrichtung.

11. Verfahren (200) gemäß einem der vorangegangenen Ansprüche, bei dem im Schritt (210) des Ausgebens das Steuersignal (130) ausgegeben wird, das dazu ausgebildet ist, um eine zu einer Smart Home-Einrichtung und/oder Smartphone-App gehörende Schnittstelle anzusteuern.

12. Steuergerät (100), das ausgebildet ist, um die Schritte des Verfahrens (200) gemäß einem der vorangegangenen Ansprüche in entsprechenden Einheiten (112; 113) anzusteuern und/oder auszuführen.

13. Computer-Programmprodukt mit Programmcode zur Durchführung des Verfahrens (200) nach einem der Ansprüche 1 bis 11, wenn das Computer-Programmprodukt auf einer Vorrichtung ausgeführt wird.

14. Staubsauger (110), insbesondere hochautomatisierter Staubsauger (110), mit einem Steuergerät (100) gemäß Anspruch 12.
